# DEMANDE DE BREVET EUROPEEN

(11) **EP 1 508 929 A1**
(43) Date de publication de la demande: **23.02.2005**
(21) Numéro de dépôt: 04300253.4
(22) Date de dépôt: 30.04.2004
(51) Int. Cl.: H01M 8/02, H01M 8/04

(54) **Plaque bipolaire pour pile à combustible et pile à combustible équipée d'une telle plaque**

(30) Priorité: 30.04.2003 FR 0305365
(71) Demandeur: Renault s.a.s., 92100 Boulogne Billancourt (FR)
(72) Inventeur: Morgante, Anna Maria, 92350 Le Plessis Robinson (FR)

(57) **Abrégé**

Une plaque bipolaire 1 pour pile à combustible comprend au moins sur une face 11 une rainure 6 apte à former des canaux de circulation de fluides, la rainure 6 s'étendant sur toute sa longueur de façon rectiligne afin de favoriser un écoulement stratifié des fluides dans un canal de circulation.

## Description

La présente invention concerne une plaque bipolaire pour pile à combustible, ainsi qu'une pile à combustible équipée d'une telle plaque.

Les piles à combustible du type à l'électrolyte solide comprennent généralement un empilement de plaques bipolaires et de membranes du type échangeuses d'ions formées par un électrolyte solide. Les plaques bipolaires sont munies de rainures formant des canaux de circulation de gaz dont une paroi est constituée par une membrane. Des gaz anodiques et cathodiques circulent dans les canaux de circulation de part et d'autre de chaque membrane. Des échanges d'ions à travers les membranes conduisent du côté anodique à une oxydation, par exemple une oxydation d'hydrogène et du côté cathodique à une réduction d'un oxydant tel que l'oxygène, avec production d'électrons. La réaction d'oxydoréduction, dans le cas notamment d'oxygène et d'hydrogène, entraîne la production d'eau. L'eau ainsi produite se propage vers les canaux de circulation par électro-osmose ou par diffusion.

Par conséquent, on retrouve dans les canaux de circulation anodique et cathodique les gaz anodiques et cathodiques ainsi que du liquide tel que de l'eau. La présence d'eau dans les canaux de circulation peut, par un recouvrement partiel de la paroi des canaux de circulation constituée par les membranes, limiter l'efficacité de la pile à combustible en entravant les échanges à travers les membranes.

Le document FR 2 786 027 décrit des plaques bipolaires pour pile à combustible comprenant des cannelures susceptibles de former des canaux de distribution de gaz prévus de manière à serpenter sur toute la surface de la membrane afin d'alimenter la membrane de la façon la plus uniforme possible. Ce document propose, pour atténuer les inconvénients liés à la présence de liquide dans les canaux de prévoir des canaux de distribution présentant en section transversale une forme ou géométrie permettant d'éloigner un liquide circulant dans lesdits canaux de la surface des membranes. Ceci est notamment réalisé en prévoyant des canaux à profil en trapèze isocèle dont la petite base est constituée par ladite surface de membrane. Les angles aigus du profil en trapèze isocèle éloignés de la membrane permettent de retenir les liquides éloignés de la membrane par effet de capillarité. Il est également envisagé des cannelures dont les parois sont munies de gorges pour retenir les liquides éloignés de la membrane également par effet de capillarité.

De telles plaques bipolaires ne permettent néanmoins pas d'obtenir des canaux permettant une circulation satisfaisante des fluides et un fonctionnement entièrement satisfaisant d'une pile à combustible.

La présente invention a pour objet une plaque bipolaire pour pile à combustible permettant d'améliorer un écoulement de fluides dans des canaux de circulation pour l'obtention de performances améliorées d'une pile à combustible.

L'invention a également pour objet une plaque bipolaire pour pile à combustible permettant une meilleure utilisation de la surface d'une membrane de pile à combustible.

Une telle plaque bipolaire pour pile à combustible, selon un aspect de l'invention, comprend au moms sur une face une rainure apte à former un canal de circulation de fluides, la rainure s'étendant sur toute sa longueur de façon rectiligne.

La prévision de rainures rectilignes permet la formation de canaux de circulation de fluides dépourvus de coudes. On favorise ainsi un écoulement stratifié des fluides permettant un écoulement différencié des fluides dans les canaux de circulation, avec une circulation des liquides dans une partie inférieure des canaux de circulation par effet de gravité ramenant les liquides plus denses, que les gaz dans la partie inférieure. Cela permet, notamment en association avec un profil en section transversale adapté des rainures, d'éloigner plus efficacement les liquides de la membrane de la pile à combustible.

Dans un mode de réalisation, la rainure, qui possède une ouverture longitudinale dans le plan de la face et qui est délimitée par une première paroi latérale, une paroi de fond et une seconde paroi latérale, présente en section transversale un profil dissymétrique relativement à un plan médiateur de son ouverture longitudinale.

La prévision d'un profil dissymétrique relativement au plan médiateur de l'ouverture longitudinale permet de prévoir des rainures avec un profil adapté pour récupérer des liquides dans une partie inférieure des canaux de circulation en éloignant les liquides de l'ouverture, i.e., en éloignant les liquides d'une membrane fermant l'ouverture, tout en prévoyant par ailleurs un profil adapté pour former des rainures proches dans une direction transversale. Ainsi, on peut prévoir sur la plaque bipolaire une plus grande densité de rainures parallèles, et utiliser au mieux la surface totale d'une membrane et ainsi améliorer les performances de la pile à combustible.

De préférence, la seconde paroi latérale rejoint l'ouverture en étant sensiblement inclinée relativement au plan de la face, et en étant orientée vers le fond de la rainure. Ceci permet, lorsque le liquide est recueilli par gravité sur la seconde paroi, d'éloigner le liquide de l'ouverture.

Dans un mode de réalisation, la rainure présente en section un profil sensiblement trapézoïdal rectangle, dont la petite base est formée par l'ouverture, la grande base par la paroi de fond, et la première paroi latérale est sensiblement perpendiculaire au plan de l'ouverture et à la paroi de fond.

Dans un mode de réalisation, au moins une portion de la première paroi latérale est inclinée relativement au plan de la face et orientée vers l'ouverture. Un tel agencement permet la prévision de rainures plus rapprochées pour une meilleure utilisation de la surface totale d'une membrane associée à la plaque bipolaire.

Avantageusement, la paroi latérale inférieure d'une rainure est munie d'au moins une gorge longitudinale adaptée pour retenir de l'eau par capillarité, notamment pour assurer une humidification des fluides circulant dans les canaux de circulation.

L'autre face de la plaque bipolaire, ou seconde face, peut être munie de rainures rectilignes parallèles aux rainures de la première face et présentant en section des profils similaires ou différents, ou de rainures rectilignes agencées selon une orientation différente à celle des rainures de la première face, et présentant en section des profils similaires ou différents.

L'invention concerne également une pile à combustible comprenant au moins une membrane échangeuse d'ions interposée entre deux plaques selon un aspect de l'invention pour la formation de canaux de circulation de gaz anodique et cathodique de part et d'autre de la membrane échangeuse d'ions.

La présente invention et ses avantages seront mieux compris à l'étude de la description détaillée de modes de réalisation pris à titre d'exemples nullement limitatifs et illustrés par les dessins annexés sur lesquels :
- la figure 1 est une vue en coupe d'un empilement alterné de plaques bipolaires et de membranes échangeuses d'ions pour la formation d'une pile à combustible selon un aspect de l'invention ;
- la figure 2 est une vue en coupe d'une plaque bipolaire selon un aspect de l'invention interposée entre deux membranes échangeuses d'ions;
- la figure 3 est une vue en élévation d'une plaque bipolaire selon un aspect de l'invention;
- la figure 4 est une vue partielle en coupe d'une plaque bipolaire selon un aspect de l'invention accolée à une membrane échangeuse d'ions;
- la figure 5 est une vue partielle en coupe d'une plaque bipolaire selon un aspect de l'invention accolée à une membrane échangeuse d'ions;
- la figure 6 est une vue partielle en coupe de deux plaques bipolaires disposées de part et d'autre d'une membrane échangeuse d'ions; et
- la figure 7 est une vue partielle en coupe d'une plaque bipolaire selon un aspect de l'invention accolée à une membrane échangeuse d'ions

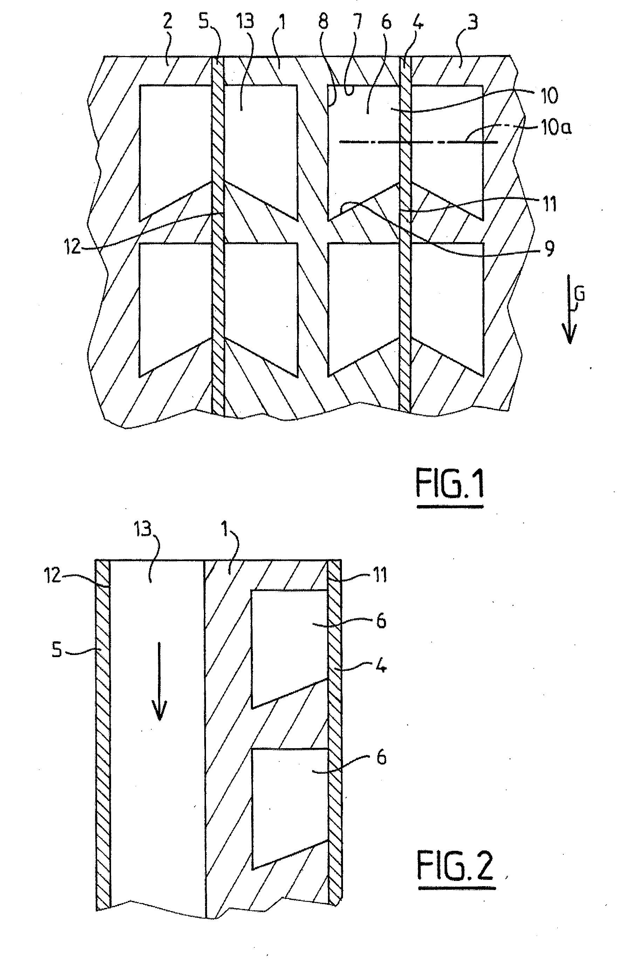

Sur la figure 1, des plaques bipolaires conformes à l'invention 1, 2, 3, ici au nombre de trois et partiellement représentées, sont disposées verticalement et juxtaposées, des membranes échangeuse d'ions 4, 5, ici au nombre de deux, étant interposées entre les plaques bipolaires 1, 2, 3.

Les plaques bipolairss 1, 2, 3 étant similaires, seule la plaque bipolaire 1 située entre les autres plaques 2, 3, sera décrite par la suite, pour des façons de concision.

La plaque bipolaire centrale 1 présente sur chacune de ses faces des rainures rectilignes à profils identiques et prévus pour la circulation de gaz anodiquee ou cathodique.

Une première face 11 de la plaque bipolaire 1 est munie de rainures 6, deux rainures étant visibles sur la figure 1. Une rainure 6 formée sur une première face 11 est délimitée par une premiere paroi latérale supérieure 7, une paroi de fond 8, et une seconde paroi latérale inférieure 9. La rainure 6 présente dans le plan de la première face 11 de la plaque bipolaire 1 une ouverture longitudinale 10, opposée à la paroi de fond 8. Les rainures 6 s'étendent longitudinalement dans une direction perpendiculaire au plan de la figure 1.

Une membrane échangeuse d'ions 4 accolée sur la face 11 de la plaque bipolaire 1 vient fermer l'ouverture longitudinale 10 de la rainure 6, formant ainsi un canal de circulation permettant le passage de fluides d'une extrémité longitudinale de la rainure 6 vers son extrémité longitudinale opposée.

Telles que représentées sur la figure 1, les rainures présentent en section transversale, c'est-à-dire dans le plan de la figure 1, un profil dissymétrique relativement à un plan médiateur 10a de l'ouverture lougitudinale 10, c'est-à-dire un plan perpendiculaire à l'ouverture longitudinale 10 et séparant l'ouverture en deux parties de largeur égale.

Les rainures 6 présentent plus particulièrement un profil à section trapézoïdale rectangle. L'ouverture 10 forme la petite base du trapèze rectangle, la paroi de fond 8, parallèle à l'ouverture, forme la grande base du trapèze rectangle, la paroi supérieure 7 est perpendiculaire à la paroi de fond 8 et au plan de la face 11 qui est le plan de l'ouverture 10, et la paroi inférieure 9 est inclinée relativement à la paroi de fond et au plan de l'ouverture 10. La paroi inférieure 9 est inclinée en étant orientée du côté de la paroi de fond 8.

Des rainures 13 sont formées sur la seconde face 12 de la plaque bipolaire 1 opposée à la première face 11. Les rainures 13 de la seconde face 12 sont parallèles aux rainures 6 de la première face 11, présentent un profil identique, et sont situées en regard des rainures 6 formées sur la première face 11, de sorte que la plaque bipolaire 1 présente un plan de symétrie.

Sur la figure 2, où les références aux élements semblables à ceux de la figure 1 ont été reprises, la plaque bipolaire 1 diffère de la plaque bipolaire de la figure 1 en ce que les rainures 13 formées sur la seconde face 12 sont perpendiculaires aux rainures 6 formées sur la première face 11.

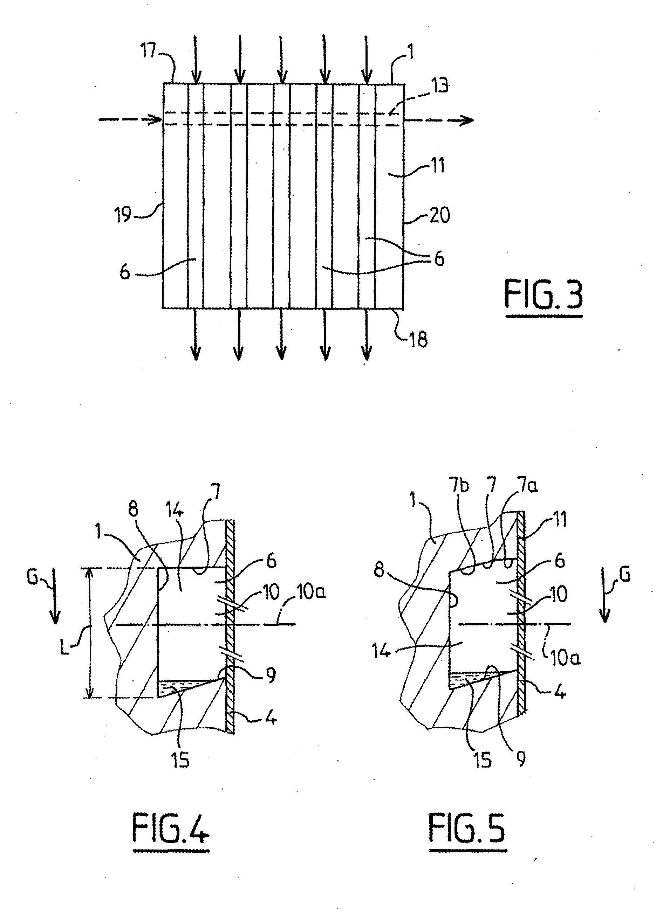

Sur la figure 3, où les références aux éléments semblables à ceux des figures 1 et 2 ont été reprises, une plaque bipolaire 1 présentant une forme générale parallélépipédique est munie sur une première face 11, visible sur la figure 1, d'une pluralité de rainures toutes rectilignes et paralléles entre elles, ici au nombre de cing, et référencées 6.

Les rainures 6 s'etendent d'un bord arrière 17 de la plaque bipolaire 1 vers le bord avant 18 opposé, en étant parallèles aux bords latéraux 19, 20 de la claque bipolaire 1.

Conformément au mode de réalisation de la figure 1, la plaque bipolaire 1 peut être munie sur sa face opposée non visible, de rainures s'étendant parallélement aux rainures 6 visibles. De telles rainures ne sont pas représentées pour des façons de clarté.

Conformément un mode de réalisation de la figure 2, et comme cela est représenté en pointillés, la plaque bipolaire 1 de la figure 3 peut être munie sur sa face opposée de rainures rectilignes 13 orientées perpendiculairement aux rainures de la première face. Les rainures de la seconde face débouchent dans ce cas à leurs extrémités au niveau des bords latéraux 20 et 19 de la plaque bipolaire 1 en étant paralléle aux bords avant et arrière 17, 18 de, la plaque bipolaire 1.

Bien entendu, on pourrait prévoir des orientations différents des rainures rectilignes 13 de la seconde face relativement aux rainures rectilignes 6 de la première face 11, dans une plage comprise entre 0° et 90°,

Pour la formation d'une pile à combustible, les plaques bipolaires sont disposées verticalement comme représenté sur la figure. 1, de façon que les rainures 6 d'une première face 11 s'étendent horizontalement. Des fluides anodique et cathodique circulent dans les canaux de circulation formés par les rainures 6 des plaques bipolaires 1, 2, 3 en association avec les membranes 4, 5. Un fluide cathodique circule dans un canal «cathodique» situé d'un côté d'une membrane 4, 5, un fluide anodique circulant dans un canal «anodique» associé circulant de l'autre côté de la membrane, en regard dudit canal cathodique.

Sur une même plaque bipolaire 1, les rainures d'une face sont prévues pour la circulation d'un fluide cathodique, et les rainures de l'autre face sont prévues pour la circulation d'un fluide anodique.

Dans le cas où les rainures prévues sur une face de la plaque bipolaire 1 sont parallèles aux rainures de l'autre face (fig. 1), on peut prévoir que le fluide circulant d'un côté de la plaque 1 circule dans le même sens que le fluide circulant de l'autre côté de la plaque 1, ou dans un sens opposé. De même, on peut, prévoir que le fluide circulant d'un côté d'une membrane circule dans le même sens ou dans un sens opposé que le fluide circulant de l'autre côté de la membrane.

Lors de la circulation des fluides dans les rainures, la réaction d'oxydoréduction conduit à la formation d'eau qui parvient dans les canaux de circulation par diffusion ou osmose au sein de la membrane.

La formation de rainures 6 s'étendant de façon rectiligne sur toute leur longueur permet l'obtention de canaux de circulation de fluides qui sont dénués de coude. Cet agencement des rainures favorise, dans le cas de fluides contenant des gaz et des liquides, un écoulement stratifié des fluide dans les canaux de circulation, notamment lorsque les rainures s'étendent sensiblement horizontalement. En effet, les liquides, plus denses que les gaz, sont entraînés vers la partie inférieure de canaux, sous l'action de la force de pesanteur, agissant verticalement vers le bas, selon la direction indiquée par la flèche G sur la figure 1. Il en résulte que l'eau aura tendance à se retrouver au fond des rainures.

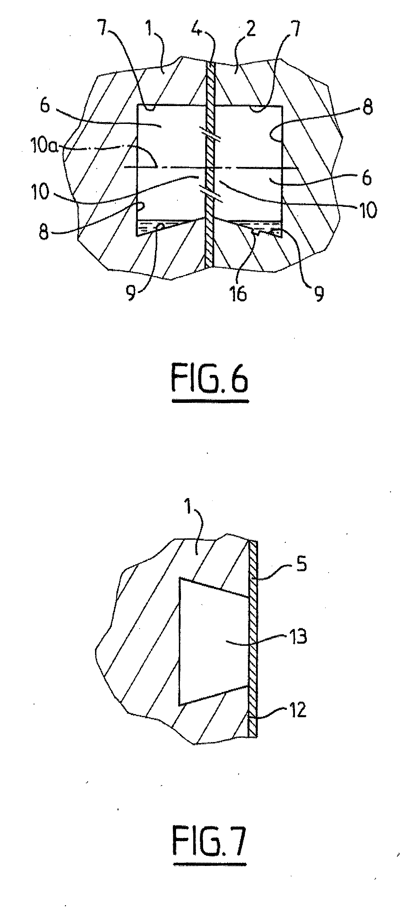

Lorsque les plaques bipolaires 1 sont disposées verticalement comme illustré sur les figures 1 et 2, cela signifie que l'eau viendra se déposer de préférence sur les parois latérales inférieures 9 des rainures horizontales 6, comme cela est mieux représenté sur les figures 4 et 5, décrites par la suite, et où les références aux éléments semblables ont été conservées.

Sur la figure 4, un fluide diphasique s'écoule de façon différenciée ou stratifiée, les gaz 14 circulant dans la partie supérieure du canal formé par une rainure 6 d'une plaque 1, et les liquides 15 circulent dans la partie inférieure du canal.

La prévision de paroi inférieure 9 rejoignant l'ouverture. longitudinale 10 de la rainure, c'est-à-dire rejoignant la surface d'échange constituée par la membrane 4, en étant inclinée et orientée vers la paroi de fond 8 de la rainure permet d'éloigner le liquide 15 recueilli par gravité sur la paroi latérale inférieure 9. En effet, le liquide 15 tend à s'écouler vers le bas le long de la paroi latérale inférieure 9 et à descendre au fond de la rigole formée entre la paroi latérale inférieure 9 et la paroi de fond 8.

Ainsi, l'ouverture 10 est dégagée du liquide et les gaz anodique et cathodique peuvent venir en contact directement avec la surface d'échange de la membrane 4, améliorant les performances d'une pile à combustible.

La prévision de rainures 6 avec en section transversale un profil dissymétrique par rapport à un plan médiateur 10a de l'ouverture 10 permet la formation de canaux de circulation avec un profil permettant la canalisation des liquides, tout en permettant la formation de rainures 6 parallèles plus rapprochées.

En effet, les rainures 6 avec une paroi inférieure 9 inclinée pour récupérer les liquides présentent une largeur totale L (figure 4) plus grande que la largeur des ouvertures 10. Cependant la largeur totale des rainures est limitée en prévoyant une paroi supérieure 7, qui est ici perpendiculaire à la face 11 de la plaque bipolaire.

Ainsi, on peut former des plaques bipolaires avec une plus grande densité de rainures, et un rapport ou ratio plus favorable entre les surfaces des ouvertures longitudinale 10 des rainures 6, et la surface totale de la plaque bipolaire 1. En d'autres termes, on obtient pour une membrane une surface totale efficace d'échange, i.e. située en regard des ouvertures 10 des rainures 6, plus importante relativement à la surface totale de la membrane. On peut obtenir de meilleures performances pour la pile à combustible, ou prévoir une pile à combustible plus compacte pour une même surface totale efficace d'échange.

Sur la figure 5, une rainure 6 présente un profil en section transversale sensiblement identique à celui de la rainure de la figure 4 à ceci près que la paroi latérale supérieure, 7 de la rainure 6 présente une première portion 7a débouchant sur l'ouverture 10 perpendiculairement à la face 11 de la plaque bipolaire 1 et une seconde portion 7b rejoignant la paroi de fond 8 en étant inclinée et orientée du côté de l'ouverture 10.

Ce mode de réalisation permet de rapprocher plus encore les rainures 6 de façon à former un réseau parallèle de rainures 6 plus dense, en limitant la largeur de la portion de fond des rainures 6.

On pourrait aussi envisager que la rainure 6 présente en section transversale un profil en parallélogramme avec une paroi latérale inférieure inclinée et orientée vers le fond 8 et une paroi latérale supérieure 7 inclinée et orientée vers l'ouverture 10.

Comme illustré sur la figure 6, où l'on a représenté deux plaques, bipolaires 1, 2 disposées de part et d'autre d'une membrane 4, une rainure 6 peut être munie d'une paroi inférieure 9 prévue avec une gorge longitudinale 16 permettant de retenir l'eau par effet de capillarité. La gorge longitudinale 16 peut avoir à titre d'exemple non limitatif un profil en arrondi, en V, en rectangle ou en carré. La gorge longitudinale 16 permet de retenir l'eau dans le canal de circulation de fluides formé par la rainure 6 afin de permettre une humidification des gaz circulant dans le canal.

Comme illustré sur la figure 7, où les références aux éléments semblables à ceux de la figure 2 ont été reprises, on peut prévoir qu'une rainure 13 formée, sur une seconde face 12 d'une plaque bipolaire 1 et prévue pour être orientée verticalement présente un profil en queue d'aronde, c'est-à-dire un profil trapézoïdal isocèle.

Bien entendu, la forme des plaques bipolaire n'est nullement limitée à la plaque illustrée par la figure 3. En particulier, on pourra prévoir avantageusement des plaques bipolaires de forme générale rectangulaire, et des rainures rectilignes parallèles prévues pour être disposées horizontalement et s'étendant parallèlement à la direction de plus grande longueur de la plaque bipolaire, On favorisera ainsi l'établissement d'un écoulement stratifié sur la longueur des canaux de circulation en s'affranchissant d'éventuelles perturbations aux extrémités des canaux de circulation,

Par ailleurs, pour l'alimentation des canaux de circulation de la pile à combustible, on pourra prévoir des distributeurs et de collecteurs munis de buses débouchant respectivement aux extrémités d'entrée et de sortie de chacun des canaux.

En outre, les profils en section transversale possibles pour les rainures ne sont pas limités aux exemples fournis. Tout profil permettant de recueillir des liquides par gravité et de les éloigner des ouvertures longitudinales des rainures, tout en limitant une largeur des rainures peut convenir.

Grâce à l'invention, on obtient des plaques, bipolaires munies de rainures adaptées pour former des canaux de circulation de fluides anodique et cathodique pour des piles à combustible permettant de favoriser un écoulement stratifié des fluides pour récupérer des produits dérivés comme de l'eau se formant suite à la réaction d'oxydoréduction. Les rainures présentent en outre un profil en section transversale permettant d'éloigner l'eau de la membrane pour libérer la surface active de la membrane et permettre un meilleur fonctionnement de la pile à combustible. Les profils des rainures sont en outre adaptés pour permettre un agencement amélioré des rainures permettant l'utilisation d'une plus grande partie des membranes comme surface active, c'est-à-dire des rainures permettant d'obtenir un ratio plus important entre la somme des surfaces des ouvertures longitudinales des rainures et la surface totale des plaques bipolaires.

## Revendications

1. Plaque bipolaire (1) pour pile à combustible comprenant au moins sur une face (11) une rainure (6) apte à former des canaux de circulation de fluides, **caractérisé par le fait que** la rainure (6) s'étend sur toute sa longueur de façon rectiligne.

2. Plaque selon la revendication 1, **caractérisé par** la rainure (6), qui posséde une ouverture longitudinale (10) dans le plan de la face (11) et qui est délimitée par une première paroi latérale (7), une paroi de fond (8) et une seconde paroi latérale (9), présente en section transversale un profil dissymétrique relativement à un plan médiateur (10a) de l'ouverture longitudinale (10).

3. Plaque selon la revendication 2, **caractérisé par le fait que** la seconde paroi latérale (9) rejoint l'ouverture (10) en étant sensiblement incliné relativement au plan de la face (11), et en étant orientée vers le fond de la rainure (6).

4. Plaque selon l'une quelconque des revendications 2 ou 3, par le fait que la raînure (6) présente en section un profil sensiblement trapézoïdal rectangle, dont la petite base est formée par l'ouverture (10), la grande base est formée par la paroi de fond (8), et la première paroi latérale (7) est sensiblement perpendiculaire au plan de l'ouverture (10) et à la de fond (8).

5. Plaque selon l'une quelconque des revendications 2 à 4, **caractérisé par le fait qu'**au moins une portion (7b) de la première-paroi latérale (7) est inclinée relativement au plan de la (11) et orientée vers l'ouverture (10).

6. Plaque selon l'une quelconque des revendications 2 à 4, **caractérisé par le fait que** la paroi latérale inférieur (9) d'une rainure est munie d'au moins une gorge longitudinale,

7. Plaque selon l'une quelconque des revendications précédentes, **caractérisé par le fait que** la seconde face (12) de la plaque bipolaire est munie de rainures (6) rectilignes parallèles aux rainures de la première face et présentant en section des profils similaires ou différentes.

8. Plaque selon l'une quelconque des revendications 1 à 6, **caractérisé par le fait que** la seconde face de la plaque bipolaire est munie de rainures (13) rectilignes agencées selon une orientation différente de celle des rainures de la première face, et présentant en section des profils similaires ou différents.

9. Pile à combustible comprenant au moins une membrane échangeuse d'ions (4) interposée entre deux plaques bipolaire (1, 2) selon l'une quelconque des revendications précédentes, pour la formation de canaux de circulation de gaz anodique et cathodique de part et d'autre de la membrane échangeuse d'ions (4),
